# EUROPEAN PATENT SPECIFICATION

(11) **EP 0 431 973 B1**
(45) Date of publication and mention of the grant of the patent: **28.02.1996**
(21) Application number: 90313351.0
(22) Date of filing: 07.12.1990
(51) Int. Cl.: G02F 1/35

(54) **Nonlinear optical device and method of manufacturing**
Nichtlineare optische Vorrichtungen und Herstellungsverfahren
Dispositif optique non linéaire et méthode de fabrication

(30) Priority: 08.12.1989 JP 317916/89
(43) Date of publication of application: 12.06.1991
(73) Proprietor: International Business Machines Corporation, Armonk, N.Y. 10504 (US)
(72) Inventor: Fukuzawa, Tadashi, Tokyo-to (JP); Kano, Satoru S., Yokohama, Kanagawa-ken (JP); Kumata, Kiyoshi, Bunkyo-ku, Tokyo-to (JP); Lee, Victor Y., San Jose, CA 95120 (US); Schellenberg, Franklin Mark, Cupertino, CA 95014 (US); Takahashi, Yutaka, Tokyo-to (JP)
(74) Representative: Burt, Roger James, Dr.

(56) References cited:
- THIN SOLID FILMS, vol. 179, no. 11, November 1989, Lausanne, CH, pp. 405-411; T. RICHARDSON et al.: "The characterization of organoruthenium complexes"
- ELECTRONICS LETTERS, vol. 22, no. 9, 24 April 1986, Enage, GB, pp. 460-462; D.B. NEAL et al.: "Second harmonic generation from LB superlattices containing two active components"
- PATENT ABSTRACTS OF JAPAN vol. 13, no. 12 (P-812) 12 January 1989 ; & JP-A-63 220 219

## Description

This invention relates to a nonlinear optical device for use in optical data processing apparatus or optical communication apparatus in which the device is controlled by external optical or electrical signals, and to a method of manufacturing such a device.

The third-order nonlinear optical coefficient χ⁽³⁾ is the key parameter for evaluating materials to be used in nonlinear optical devices. Both real and imaginary parts of the refractive index significantly change with the light intensity only when χ⁽³⁾ is sufficiently large. Optical devices which are to be controlled by an external light or electrical field must have a large χ⁽³⁾ for practical application.

Some classes of semiconductor are known to have large χ⁽³⁾ and can be integrated with conventional semiconductor optical devices.

The literature concerning these techniques includes the following:
(1) S. Y. Yuen and P. A. Wolff: Technical Digest, pp. 150 - 153 of Nonlinear Optical Properties of Materials Topical Meeting; August, 1988, Troy, New York.
(2) D. A. B. Miller, C. T. Seaton, M. E. Price, and S. D. Smith: Phys. Rev. Lett. 47, 197 (1981).
(3) C. K. N. Patel, R. E. Slusher, and P. A. Fleury: Phys. Rev. Lett. 17, 1011 - 1017 (1966).
(4) D. A. B. Miller, D. S. Chemla, D. J. Eilenberger, P. W. Smith, A. G. Gossard, and W. Wiegmann: Appl. Phys. Lett., 42, 925 (1983).
(5) H. M. Gibbs, S. S. Tarng, J. L. Jewell, D. A. Weinberger, and K. Tai: Appl. Phys. Lett., 41, 221-222 222 (1982).
(6) A. Honold, L. Schultheis, J. Kuhl, and C. W. Tu: Technical Digest of 16th International Conf. on Quantum Electronics, Tokyo (1988).
(7) T. Ishihara, J. Takahashi, and T. Goto: Solid State Communication, 69, 933 (1989).
(8) E. Hanamura: Nato workshop on "Optical Switching in Low-dimensional Systems," October (1988), Marballa, Spain.
(9) Yu. I. Dolzhenko, T. Inaba and Y. Maruyama: Bull. Chem. Soc. Japan, 59, 563 (1986).

In a narrow-band-gap semiconductor, band filling (Ref. 2) and nonparabolicity of the conduction band (Ref. 3) cause extremely large nonlinearity (e.g., χ⁽³⁾ = 3 x 10⁻¹esu for a single InSb crystal). For practical use, however, because the nonlinearity is significant at longer wavelengths (5 µm to 10 µm), this class of semiconductor will not be employed in optical data processing apparatus.

It is desirable to find other mechanisms for achieving large χ⁽³⁾ at shorter wavelengths for higher packing density of the optical device. The excitonic transition of semiconductor quantum wells is very promising (Refs. 4, 5). The large χ⁽³⁾ comes from saturation absorption at exciton resonances. Since the contribution of excitonic transitions (compared to that of inter-band transition) is larger when the band gap is wide, this mechanism is more favourable at shorter wavelengths. The excitonic process giving rise to large χ⁽³⁾ is common to bulk crystal systems, but the excitonic transition of a modulated structure or quantum well system (hereafter the former is included in the latter) is more significant because of the enhancement by the quantum confinement effect.

Although this system is far better than bulk crystal systems, it has still several problems to be solved from practical viewpoints.

1) The exciton binding energy in a quantum well is still low (around 10 meV). Therefore, phonons at room temperature decrease the number of excitons, and it is necessary to operate the device below the temperature of liquid nitrogen to obtain strong absorption.
2) The system response time is long because of the long lifetime of the free carrier, and therefore a fast device will be hard to obtain.
3) Manufacturing the semiconductor quantum well requires expensive equipment and complicated manufacturing processes such as molecular beam epitaxy (MBE) and metal organic chemical vapour deposition (MOCVD).

It is still not possible to make an ideal quantum well with completely flat structure on the atomic scale. A fluctuation in the epitaxial growth process causes irregularity in the size of the quantum well. An exciton lifetime of 2.8 ps is expected for the ideal quantum well system, while 180 ps has been observed for an actual system (Ref. 6).

The object of the present invention is to provide an improved nonlinear optical device and a method of manufacturing such a device.

The invention relates to a nonlinear optical device comprising a film structure coated on a substrate without interposition of adhesive.

According to the invention the device is as defined in claim 1.

The invention also relates to a method of manufacturing a nonlinear optical device as defined in claim 5.

In order that the invention may be more readily understood embodiments will now be described with reference to the accompanying drawings, in which:
Figures 1, 2, 3, 4, and 5 are sectional views respectively showing the structures of different embodiments of optical devices according to the invention,
Figure 6 is a crystal structure model depicting the single-crystal structure of (C₅H₁₁NH₃)₂PbI₄ used according to the invention,
Figure 7 is a graph showing the result of measurements taken on the formed film by means of a WYKO interferometry system,
Figure 8 is a graph showing the X-ray diffraction distribution of the film formed,
Figure 9 is a graph showing the absorption spectra obtained respectively from the thin film of this invention and from a single crystal, and
Figures 10 and 11 are graphs representing the bistable characteristics of different embodiments of the invention.

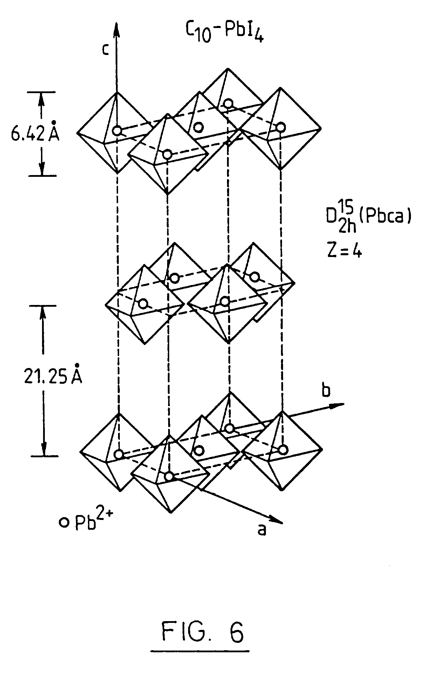

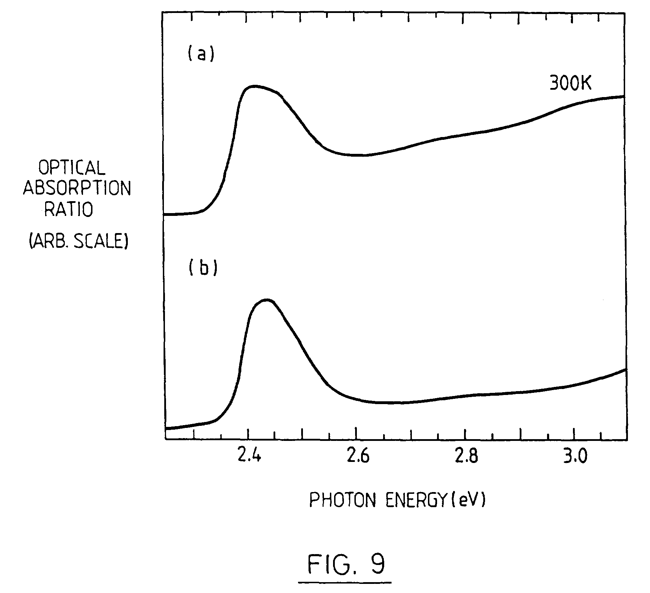

In order to obtain a large χ⁽³⁾ with a fast response time, it is desirable to use a multi-quantum-well system for a semiconductor, without any irregularity in the well structure. A two-dimensional perovskite semiconductor crystal, (C₁₀H₂₁NH₃)₂PbI₄, which is used in the stage of an intercalation of the semiconductor layer and an organic material layer, is to be used. The crystal structure of (C₁₀H₂₁NH₃)₂PbI₄ is shown in Figure 6. As shown in this figure, each mono-layer consisting of Pb⁺ and I is sandwiched between two layers of alkyl-NH₃. The N atom, which is adjacent to the Pb⁺ ion, forms a ligand field, thereby determining the wavelength of the optical transition of Pb⁺. What has been described above is an ideal quantum well structure in the form of intercalation of a semiconductor and an organic material and having a constant well thickness of 6.24 Å (6.24 x 10⁻¹⁰m) throughout the crystals. Moreover, the binding energy of the exciton in this quantum well is quite large: the observed value is 370 meV (which is twelve times as large as that of the bulk crystal of PbI₂), and thus one can observe a strong absorption peak even at room temperature, as shown at (a) in Figure 9.

The two-dimensional perovskite semiconductor crystal looks extremely promising as a non-linear optical device. However, the problem lies in the difficulty of making a large enough crystal for device application, if we use the crystal growth method reported so far (Ref. 9). It takes one to two months to obtain a single crystal of 2 x 2 x 0.1 mm³ by the silica-gel technique. Another problem is the difficulty in controlling the crystal size (especially the crystal thickness) when we use this technique.

A novel epitaxial technology for making a thin optical film of two-dimensional perovskite on a transparent substrate will now be described. This technology is essential for realisation of non-linear optical data-processing devices. Thus, it provides a nonlinear optical component with high optical quality, which affords an ultra-fast response time and high nonlinear optical sensitivity.

### Embodiment 1

### (a) Synthesis of (C₁₀H₂₁NH₃)₂PbI₄

In a flask, 9.5 g of lead acetate was suspended in 150 ml of distilled water. 2.86 ml of glacial acetic acid was added and stirred. Then 10 ml of decyl amine was added and stirred for 10 minutes. A solution of 16.6 g of potassium iodide in 100 ml distilled water was added to the above mixture and stirred. A thick orange suspension formed was filtered off and washed with water. The obtained crystals were dried under a vacuum. The product was recrystallised in nitromethane to give a thin golden platelet.

### (b) Spin coating of (C₁₀H₂₁NH₃)₂PbI₄

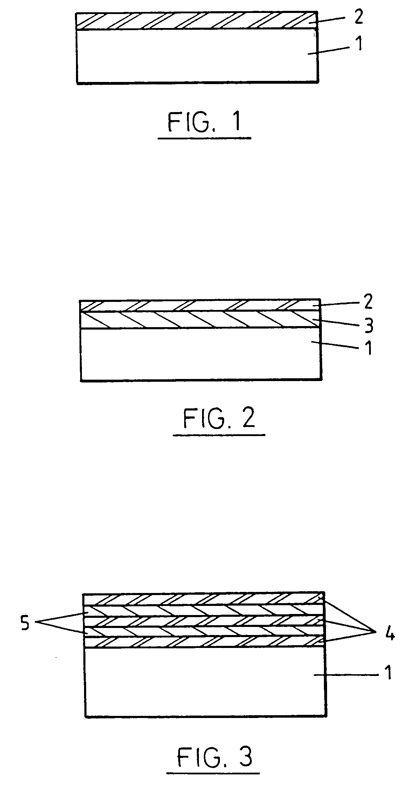

A 5 wt% solution of (C₁₀H₂₁NH₃)₂PbI₄ in acetone was spin-coated on a one-inch diameter quartz disc (1 in Figure 1). The spinning speed was 2000 rpm.

### (c) Evaluation of the film

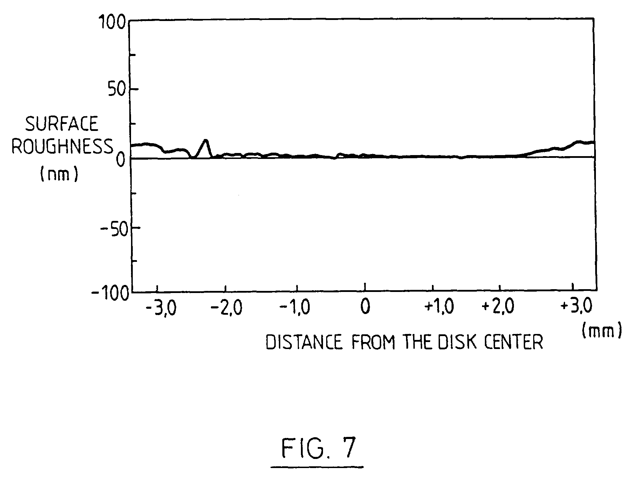

An optically flat thin film 2 of (C₁₀H₂₁NH₃)₂PbI₄ was formed, as shown in Figure 1. The thickness and smoothness of the film were measured by a WYKO interferometry system. The result is shown in Figure 7. Thus an optically flat thin film having 100 nm thickness and less than λ/100 surface roughness was obtained except for the edge of the substrate.

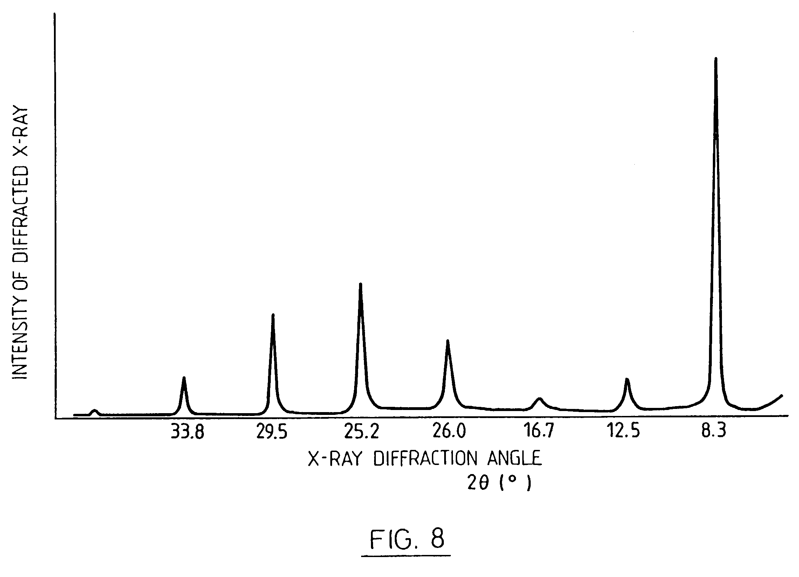

The crystal structure of the film was evaluated by X-ray diffraction measurement. The X-ray diffraction intensity is plotted against the diffraction angle in Figure 8. The figure shows the existence of quite a good periodicity for 21.3 Å (21.3 x 10⁻¹⁰m), which is the distance of separation of the two-dimensional Pb layers of the crystal along the c axis (Figure 6). This result implies that each plane of PbI₄, which is a quantum well, is stacked up with the distance of 21.25Å (21.3 x 10⁻¹⁰m), as in a crystal, to form a multi-quantum-well structure along the substrate surface. The film is not necessarily a single crystal, although no crystallinity in the direction of the a and b axes could be detected. However, even where a single crystal of (C₁₀H₂₁NH₃)₂PbI₄ itself is concerned, the quantum confinement mechanism depends solely on the well structure along the c axis; therefore, the optical property based on this mechanism will be observed, even when it has the quantum well structure only in the direction of the c axis.

The absorption spectrum of a film (made from 5% solution) is shown at (b) in Figure 9. A strong peak around 2.42 eV, which is the exciton absorption in the PbI₄ quantum well, was observed as in the case of a single crystal ((a) in Figure 9)).

Observation with an optical microscope showed that there was no visible crystal domain structure in the thin-film layer. On the other hand, when a 10 wt% solution of (C₁₀H₂₁NH₃)₂PbI₄ was used for spin coating, the thin film became opaque and many crystal domains were observed.

With conventional technology, it takes several months to grow most bulky single crystals of 2 x 2 x 0.1 mm³. With the technology described herein, powder crystals, which can be obtained in only half a day, are used to form an optical-quality thin-film crystal with a large active area on a substrate very quickly by spin coating. The technology of spin coating the thin film with the optical property described above has the potential to take the place of the hitherto used manufacturing methods, such as MBE and MOCVD processes, for which complex and costly equipment and sophisticated techniques are required.

Note that a suitable solvent of (C₁₀H₂₁NH₃)₂PbI₄ such as dimethoxyl ethane may be chosen as a solvent instead of acetone.

### Embodiment 2

A different structure from that in Embodiment 1 is shown in Figure 2. The difference is in the incorporation of a waveguide layer 3. In this case, a 1-µm Corning 7059 glass layer was first sputtered on a quartz substrate. Then a 200-nm thin-film layer of (C₁₀H₂₁NH₃)₂PbI₄ was made by spin coating, which is similar to the method described in Embodiment 1. With this arrangement, photons having an energy of 2.4 eV along the thin film and 7059 glass layers are projected into the optical waveguide. For waveguide mode excitation, a prism coupler method was utilised. With the irradiation of the optical beam path in the waveguide by a light with 2.45-eV photon energy and 2-ps pulse width from the direction normal to the substrate, the light beam intensity of 2.4 eV was increased by 27 times. This optical modulation by light shows the ultra-high-speed response of (C₁₀H₂₁NH₃)₂PbI₄.

### Embodiment 3

A multi-layered structure of (C₁₀H₂₁NH₃)₂PbI₄ layers and resist layers for lithography was made in this embodiment. In Figure 3, (C₁₀H₂₁NH₃)₂PbI₄ layers are denoted by the number 4 and poly-(di-n-hexylsilane) layers are denoted by the number 5. The thicknesses of these layers were 100 nm and 300 nm, respectively. The spin coating of the (C₁₀H₂₁NH₃)₂PbI₄ layer was done in the same way as in Embodiment 1. The high-molecular-weight poly-(di-n-hexylsilane) layers were made by spin coating using a 2.5% solution in isooctane.

An optical modulation experiment was conducted with this structure. The wavelengths of the incident beam and control beam were the same as in Embodiment 2. In this case, the sample was irradiated by a parallel beam of normal incidence and also by the controlling light beam at an incidence angle of 15°. For a series of optical image information processes, observation was made by a CCD TV camera from the direction opposite to that of the incident light beam array.

### Embodiment 4

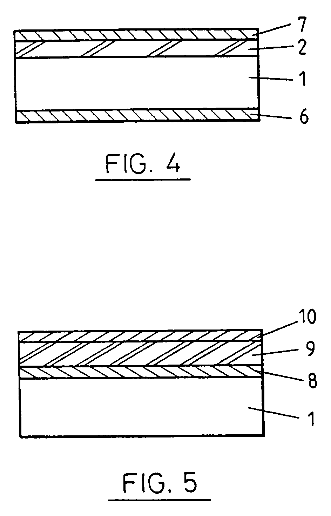

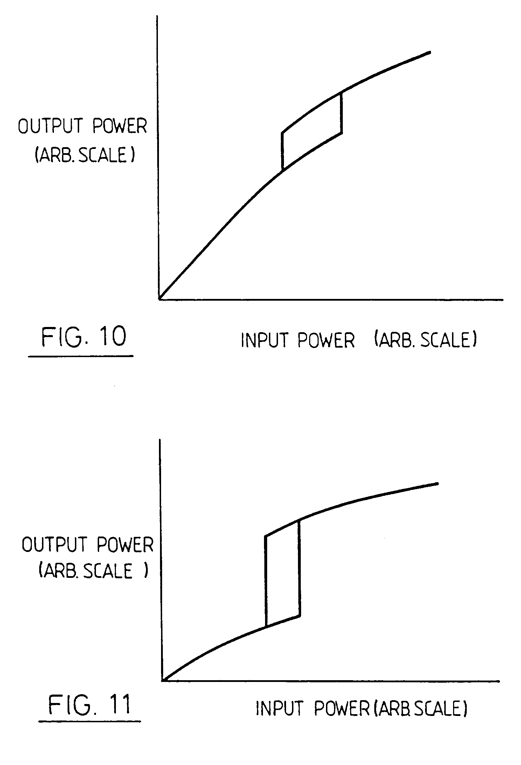

The quartz plate 1 with semi-transparent mirror 6 shown in Figure 4 was used as a substrate to be spin-coated. A thin film of (C₁₀H₂₁NH₃)₂PbI₄ formed thereon as in Embodiment 1. Then gold was vapour-deposited on the thin film as a semi-transparent mirror 7. Two mirrors 6 and 7 constitute an optical resonator (Figure 4). A light beam of 2.45-eV photon energy was introduced by normal incidence to the substrate. The light intensity after passing through the resonator had the optically bistable characteristic, as shown in Figure 10.

### Embodiment 5

Other two-dimensional perovskites, MX₄ (CₙH₂ₙ₊₁NH₃)₂, were also synthesised and used as thin films. Here M represents a metal ion such as Cu, Cd, Mn or Fe, and X represents either a halide ion or an I, CI, or Br ion. Alkyl-ammoniums with n = 3, 5, 8, and 10 of the mono-ammonium family, were used. In these perovskites, the periodicity originating from the quantum well structure of the spin-coated thin-film layer was observed.

### Embodiment 6

A structure using (C₅H₁₁NH₃)₂PbI₄ as a two-dimensional perovskite that resembles that of Embodiment 4 is shown in Figure 5. A quartz disc with a semitransparent gold mirror 8 formed thereon was used as a substrate, as in Embodiment 4, but here, a thin film 9 was formed on the metal layer side of the substrate 1. Then, a half mirror 10 was formed on this surface. An optically bistable characteristic was obtained in this Embodiment as in Embodiment 4 (Figure 11).

As described above, the methods described herein make it possible to provide a quantum well mechanism without using a single-crystal manufacturing process, which is complex and time-consuming, thereby enabling a nonlinear optical device to be produced at low cost and by a simplified process.

## Claims

1. A nonlinear optical device comprising a film structure (2) coated on a substrate (1), waveguide layer (3) or gold mirror (7) without interposition of adhesive
wherein said film structure comprises
a modulated intercalation structure consisting of a layer of semiconductor material and a layer of organic material said layers having different energy gaps and said modulated structure being a super lattice structure, and wherein said film structure is an assembly of microcrystals.

2. A nonlinear optical device as claimed in claim 1, wherein each of said microcrystals has a specified axis in the normal direction to said substrate, but randomly orientated axes in the parallel direction to said substrate.

3. A nonlinear optical device as claimed in claim 1 or 2, wherein said film structure is (C₁₀H₂₁HN₃)₂PbI₄.

4. A nonlinear optical device as claimed in claim 1 or 2, wherein said film structure is MX₄(CₙH₂ₙ₊₁NH₃)₂ wherein M denotes a metal ion that is one of Cu, Cd, Mn, Ge and Fe, X a halogen ion that is one of I, Cl and Br, and n is an integer up to 10.

5. A method of manufacturing a nonlinear optical device as claimed in claim 1 comprising dissolving a film structure material in a solvent, and spin coating said solution onto a substrate, waveguide layer or gold mirror and thereby forming a film having an organic material layer with one of its crystal axes oriented in the direction normal to said substrate, waveguide layer or gold mirror, such that said film has a modulated structure of the two types of layers alternately intercalated and differing in energy gap in said direction.

6. A method of manufacturing a nonlinear optical device as claimed in claim 5, wherein said film structure material is (C₁₀H₂₁NH₃)₂PbI₄.

7. A method of manufacturing a nonlinear optical device as claimed in claim 5, wherein said film structure material is MX₄ (CnH₂ₙ₊₁NH₃)₂ wherein M denotes a metal ion that is one of Cu, Cd, Mn, Ge and Fe, and X a halogen ion that is one of I, Cl, and Br, and n is an integer up to 10.

8. A method of manufacturing a nonlinear optical device as claimed in any one of claims 5, 6 or 7, wherein said solvent is acetone.

9. A method of manufacturing a nonlinear optical device as claimed in any one of claims 5, 6 or 7, wherein said solvent is dimethoxyl ethane.

10. A method as claimed in claim 6 comprising preparing a solution of (C₁₀H₂₁NH₃)₂PbI₄ at a concentration lower than 10 wt% by dissolving (C₁₀H₂₁NH₃)₂PbI₄ in acetone, and then spin-coating said solution at a spin speed higher than 2,000 rpm, thereby forming a film of (C₁₀H₂₁NH₃)₂PbI₄ with one of its crystal axes orientated normal to the substrate, waveguide layer or gold mirror.

## Patentansprüche

1. Eine nichtlineare optische Vorrichtung bestehend aus einem mit einer Filmstruktur 2 beschichteten Substrat 1, einer Wellenleiterschicht 3 oder einem Goldspiegel 7 ohne dazwischenliegende Kleberschicht,
wobei die Filmstruktur eine aus einer lage Halbleitermaterial und einer Lage organischem Material bestehende modulierte Schichtung enthält, deren beide Lagen unterschiedliche Bandlücken aufweisen, und wobei die modulierte Schicht eine Übergitterstruktur und die Filmstruktur eine Ansammlung von Mikrokristallen ist.

2. Eine nichtlineare optische Vorrichtung gemäß Anspruch 1, bei der jeder Mikrokristall eine bestimmte Achse senkrecht zum Substrat sowie zufällig orientierte Achsen parallel zum Substrat besitzt.

3. Eine nichtlineare optische Vorrichtung gemäß Anspruch 1 oder 2, bei der die Filmstruktur aus (C₁₀H₂₁NH₃)PbI₄ besteht.

4. Eine nichtlineare optische Vorrichtung gemäß Anspruch 1 oder 2, bei der die Filmstruktur aus MX₄(CₙH₂ₙ₊₁NH₃) besteht, wobei M ein Cu-, Cd-, Mn-, Ge- oder Fe-Metallion, X ein I-, Cl- oder Br-Halogenion und n eine ganze Zahl bis 10 ist.

5. Ein Verfahren zur Herstellung einer nichtlinearen optischen Vorrichtung gemäß Anspruch 1, bei dem ein Filmstrukturmaterial in einem Lösungsmittel gelöst und diese Lösung auf ein Substrat, eine Wellenleiterschicht oder einen Goldspiegel aufgeschleudert wird und dabei einen Film mit einer Schicht aus organischem Material bildet, dessen eine Kristallachse senkrecht zum Substrat, zur Wellenleiterschicht oder zum Goldspiegel steht, so daß der Film in dieser Richtung eine modulierte Struktur aus zwei abwechselnden Schichtarten mit unterschiedlichen Bandlücken aufweist.

6. Ein Verfahren zur Herstellung einer nichtlinearen optischen Vorrichtung gemäß Anspruch 5, wobei das Filmstrukturmaterial (C₁₀H₂₁NH₃)₂PbI₄ ist.

7. Ein Verfahren zur Herstellung einer nichtlinearen optischen Vorrichtung gemäß Anspruch 5, wobei das Filmstrukturmaterial MX₄(CₙH₂ₙ₊₁NH₃)₂ ist und wobei M ein Cu-, Cd-, Mn-, Ge- oder Fe-Metallion, X ein I-, Cl- oder Br-Halogenion und n eine ganze Zahl bis 10 ist.

8. Ein Verfahren zur Herstellung einer nichtlinearen optischen Vorrichtung gemäß Anspruch 5, 6 oder 7, wobei das Lösungsmittel Aceton ist.

9. Ein Verfahren zur Herstellung einer nichtlinearen optischen Vorrichtung gemäß Anspruch 5, 6 oder 7, wobei das Lösungsmittel Dimethoxylethan ist.

10. Ein'Verfahren gemäß Anspruch 6, bei dem eine unter 10-prozentige (C₁₀H₂₁NH₃)₂PbI₄-Lösung durch Auflösen von (C₁₀H₂₁NH₃)₂PbI₄ in Aceton hergestellt und mit mehr als 2000 U/min aufgeschleudert wird, wodurch ein (C₁₀H₂₁NH₃)₂PbI₄-Film entsteht, bei dem eine Kristallachse senkrecht zum Substrat, zur Wellenleiterschicht oder zum Goldspiegel ausgerichtet ist.

## Revendications

1. Dispositif optique non-linéaire, comprenant une structure en film (2), appliquée en revêtement sur un substrat (1), une couche formant guide d'ondes (3) ou un miroir en or (7), sans interposition d'adhésif
dans lequel ladite structure en film comprend
une structure d'interposition modulée, constituée d'une couche d'un matériau semi-conducteur et d'une couche d'un matériau organique, lesdites couches ayant des intervalles d'énergie entre deux bandes différents et ladite structure modulée ayant une structure à super-réseau, et dans lequel ladite structure en film est un ensemble de microcristaux.

2. Dispositif optique non-linéaire selon la revendication 1, dans lequel chacun desdits microcristaux a un axe spécifique, placé dans la direction normale par rapport audit substrat, mais des axes orientés de façon aléatoire dans la direction parallèle audit substrat.

3. Dispositif optique non-linéaire selon la revendication 1 ou 2, dans lequel ladite structure en film est constituée de (C₁₀H₂₁HN₃)₂PbI₄.

4. Dispositif optique non-linéaire selon la revendication 1 ou 2, dans lequel ladite structure en film est constituée de MX₄(CₙH₂ₙ₊₁NH₃)₂, dans laquelle M est un ion métal choisi parmi Cu, Cd, Mn, Ge et Fe, X est un ion halogène choisi parmi I, Cl et Br, et n est un entier allant jusqu'à 10.

5. Procédé de fabrication d'un dispositif optique non-linéaire selon la revendication 1, comprenant la dissolution d'un matériau de structure en film dans un solvant et le revêtement par centrifugation de ladite solution sur un substrat, ladite couche formant guide d'ondes ou ledit miroir en or, et la constitution, de cette manière, d'un film ayant une couche de matériau organique avec l'un de ses axes de cristaux orienté dans la direction normale par rapport audit substrat, ladite couche formant guide d'ondes ou ledit miroir en or, de manière que ledit film ait une structure modulée des deux types de couches, intercalées de façon alternée et ayant des intervalles d'énergie entre deux bandes différents dans ladite direction.

6. Procédé de fabrication d'un dispositif optique non-linéaire selon la revendication 5, dans lequel ledit matériau de structure en film est (C₁₀H₂₁NH₃)₂PbI₄.

7. Procédé de fabrication d'un dispositif optique non-linéaire selon la revendication 5, dans lequel ledit matériau de structure en film est MX₄ (CnH₂ₙ₊₁NH₃)₂, dans laquelle M est un ion métal choisi parmi Cu, Cd, Mn, Ge et Fe, X est ion halogène choisi parmi I, Cl et Br, et n est un entier allant jusqu'à 10.

8. Procédé de fabrication d'un dispositif optique non-linéaire selon l'une quelconque des revendications 5, 6 ou 7, dans lequel ledit solvant est l'acétone.

9. Procédé de fabrication d'un dispositif optique non-linéaire selon l'une quelconque des revendications 5, 6 ou 7, dans lequel ledit solvant est du diméthoxyl éthane.

10. Procédé selon la revendication 6, comprenant la préparation d'une solution de (C₁₀H₂₁NH₃)₂PbI₄ en une concentration inférieure à 10 % en poids par dissolution de (C₁₀H₂₁NH₃)₂PbI₄ dans l'acétone, puis revêtement par centrifugation de ladite solution à une vitesse de rotation supérieure à 2000 tr/mn, de manière à former un film de (C₁₀H₂₁NH₃)₂PbI₄, avec l'un des ses axes de cristaux orienté normalement par rapport au substrat, à la couche formant guide d'ondes ou au miroir en or.
